# EUROPEAN PATENT SPECIFICATION

(11) **EP 2 084 091 B1**
(45) Date of publication and mention of the grant of the patent: **22.08.2012**
(21) Application number: 07848148.8
(22) Date of filing: 09.11.2007
(51) Int. Cl.: B65H 18/10, H04L 29/08, H04L 29/06, H04W 4/14

(54) **FIBRE-WEB MACHINE SLITTER-WINDER**
SCHNEIDE- UND WICKELBAUGRUPPE FÜR EINE FASERVLIESMASCHINE
COUPEUSE-BOBINEUSE DE MACHINE A BANDES FIBREUSES

(30) Priority: 22.11.2006 FI 20060479 U
(43) Date of publication of application: 05.08.2009
(73) Proprietor: Metso Paper, Inc., 00130 Helsinki (FI)
(72) Inventor: FÖHR, Heikki, 04400 Järvenpää (FI)
(74) Representative: TBK
(86) International application number: PCT/FI2007/050604
(87) International publication number: WO 2008/062096

(56) References cited:
- EP-A- 0 733 447
- EP-A- 1 080 887
- EP-A- 1 179 630
- EP-A- 1 657 193
- EP-A- 1 657 194
- DE-A1- 19 846 894
- DE-U1- 20 220 537
- GB-A- 2 114 550
- US-A- 3 356 273
- US-A1- 2002 029 785

## Description

The invention relates to a slitter-winder according to claim 1.

As known from prior art, a fibre web, such as a paper or board web, is manufactured in machines which together constitute a manufacturing line which can be hundreds of metres long. Modem fibre-web machines can produce more than 450,000 tons of web a year. The speed of the paper machine can exceed 2,000 m/min (120 km/h) and the width of the web can be more than 11 m, the speed of board machines is typically lower.

In fibre-web manufacturing lines known from prior art, manufacturing takes place as a continuous process. A web completing in a machine is wound by a winder around a winding shaft i.e. a reel spool into a machine reel the diameter of which can be more than 3.5 m and the weight of which more than 100 tons. The purpose of winding is to modify the paper web manufactured as planar into a more easily processable form. On the winder, the continuous process of the machine breaks for the first time and shifts into periodic operation. This periodicity is tried to be made with efficiency as good as possible in order to not to waste already done work.

The machine-reel web produced in manufacturing is full-width and even more than 100 km long so it must be slit into partial webs with suitable width and length for the customers of the mill and to be wound around cores into so-called customer reels before delivering from the mill. These slitting and winding take place as known from prior art in an appropriate separate machine i.e. in a slitter-winder.

As known from prior art, in the slitter-winder the machine reel is unwound, the wide web is slit in the slitting section into several narrower partial webs which are wound up in the winding section around winding cores, such as spools, into customer reels. When the customer reels are completed, the slitter-winder is stopped and the reels i.e. the so-called set is removed from the machine after which the process is continued with the winding of a new set. These stages are repeated periodically until fibre web runs out of the machine reel, whereby a machine reel change is performed and the operation starts again as the winding of a new machine reel.

As known from prior art, in the slitting sections of slitter-winders in connection with slitting, uneven web edges i.e. edge trims are also slit in the travel direction of the web from the edges of outmost partial webs. Because the slitting into partial webs is tried to be performed close to the winding-up, guiding the edge trims slit in the same connection can prove to be problematic and require e.g. suction-driven edge-trim transport systems.

As known from prior art, in slitter-winders of multistation-winder type, the edge trims are slit when required at two points/stages: in a so-called pre-slitting section in which first edge trims are slit immediately after unwinding before slitting partial webs, and the second, actual edge trims are slit in the slitting section in connection with the slitting of partial webs. If utilising pre-slitting has not been necessary, the uneven edges of the web have been slit in the actual slitting section of partial webs. The edge trims produced in the slitting of edge trims are transported by suction-driven edge-trim transport systems into a pulper which is usually an assigned edge-trim pulper.

Prior art slitter-winder are disclosed in DE 20220537U1 EP117630 A1 and EP16557193A1.

The object of the invention is to provide a fibre-web machine slitter-winder in which guiding edge trims into broke can be easily and simply implemented.

To achieve the above-mentioned objects and those that come out later, the slitter-winder according to the invention is mainly characterised in what is presented in the characterising part of claim 1.

According to the invention, the edge trims of the web are slit by an edge-trim slitting device before the actual slitting of the web into partial webs performed in the slitting section of the slitter-winder in a place from which the edge trims can be easily guided to the pulper. The edge-trim slitting device is located close to the unwinding station of the web, most suitably immediately after the unwinding station, whereby guiding the edge trims to the pulper is extremely easy and simple.

According to an advantageous additional characteristic of the invention, the slit edges of the web are monitored by a measuring device for ensuring the correct width of outmost partial webs in the slitting section in connection with the slitting of partial webs, whereby the edges can be kept accurately enough in their places in order to the edges of the completed reel remain adequately even and thus the reel being manufactured deliverable and the edges will no longer be slit at all in connection with the partial web slitting.

Furthermore, a feedback is arranged according to an advantageous additional characteristic of the invention from the measuring device to the edge-trim slitting, whereby, based on the measurement data of the edge, the lateral position of the edge-trim slitting is adjusted so that the quality of the reel/reels being manufactured remains good.

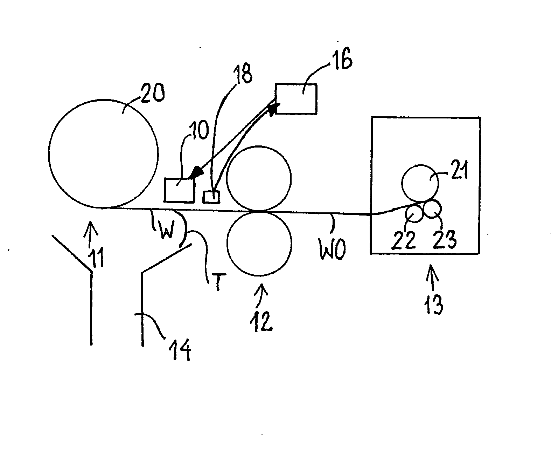

The invention will now be described in more detail with reference to the figure of the accompanying drawing, to the details of which the invention is, however, by no means intended to be narrowly confined.

The figure schematically shows an embodiment of the invention. From a machine reel 20 is unwound a full-width fibre web W at an unwinding station 11 below which is located a pulper 14. The full-width fibre web W is slit in a slitting section 12 of the slitter-winder into partial webs WO which are guided into a winding-up section 13 in which the partial webs WO are wound into partial web reels 21 e.g. by a carrier-roll winder in which the partial web reels 21 to be wound are wound carried by two carrier rolls 22, 23. According to the invention, an edge trim T is slit from both edges of the full-width web W by an edge-trim slitting device 10 before the actual slitting of the web into partial webs WO performed in the slitting section 12 of the slitter-winder in a place from which the edge trims T can be easily guided to the pulper 14. The edge-trim slitting device 10 typically comprises means for slitting an edge trim from both edges of the web. The edge-trim slitting device 10 is located close to the unwinding station 20, most suitably immediately after the unwinding station 20, whereby guiding the edge trims T to the pulper 14 is extremely easy and simple. After slitting the edge trims advantageously immediately before partial-web slitting or in the slitting section 12 of partial-web slitting, the position of the web edges is monitored by a measuring device 18, whereby the edges can be kept accurately enough in their places in order to the edges of the completed partial web reel 21 be adequately even and thus deliverable, whereby the edge trims are no longer slit in the slitting section 12 in connection with partial-web slitting. The measurement data of the measuring device 18 are conveyed into a measurement-data processing device 16 for ensuring the correct width of the outmost partial webs in the slitting section 12 in connection with slitting partial webs. From the measurement-data processing device 16, there is advantageously a feedback to the edge-trim slitting 10, whereby, based on the measurement data of the position of the web edges, the lateral position of the edge-trim slitting is adjusted so that the quality of the reel being manufactured remains good. It is also possible to position measuring devices at several points on the run of the web for monitoring the web edges.

The invention was described above only referring to some of its advantageous embodiments, to the details of which the invention is, however, by no means intended to be narrowly confined.

## Claims

1. A slitter-winder which comprises an unwinding station (11), a slitting section (12) and a winding-up section (13) of the slitter-winder, below which unwinding station (11) is located a pulper (14), on the run of the web (W) between the unwinding station (11) and the slitting section (12) of which slitter-winder is located an edge-trim slitting device (10), **characterised in that**
the edge-trim slitting device (10) is located close to the unwinding station (11) so that before the actual slitting of the web into partial webs performed in the slitting section slit edge trims (T) which are slit from both edges of the full-width web by the edge-trim slitting device can be guided into the pulper (14) of the unwinding station (11).

2. A slitter-winder according to claim 1, **characterised in that** after the edge-trim slitting device (10), in the vicinity of the slitting section (12) of the slitter-winder is located a measuring device (18) for ensuring the correct width of the web.

3. A slitter-winder according to claim 1 or 2, **characterised in that** the measuring device (18) is coupled to a measurement-data processing device (16) and that, from the measurement-data processing device (16), there is a feedback to the edge-trim slitting device (10).

## Patentansprüche

1. Rollenschneidmaschine, die eine Abwickelstation (11), einen Schneidabschnitt (12) und einen Aufwickelabschnitt (13) der Rollenschneidmaschine aufweist, wobei unterhalb der Abwickelstation (11) ein Pulper (14) angeordnet ist, wobei an dem Lauf der Bahn (W) zwischen der Abwickelstation (11) und dem Schneidabschnitt (12) der Rollenschneidmaschine eine Randstreifenschneidvorrichtung (10) angeordnet ist,
**dadurch gekennzeichnet, dass**
die Randstreifenschneidvorrichtung (10) so nahe zu der Abwickelstation (11) angeordnet ist, dass vor dem eigentlichen Schneiden der Bahn zu Teilbahnen, das in dem Schneidabschnitt ausgeführt wird, geschnittene Randstreifen (T), die von beiden Rändern der in voller Breite ausgebildeten Bahn durch die Randstreifenvorrichtung geschnitten werden, in den Pulper (14) der Abwickelstation (11) geführt werden können.

2. Rollenschneidmaschine gemäß Anspruch 1, **dadurch gekennzeichnet, dass** nach der Randstreifenschneidvorrichtung (10) in der Nähe des Schneidabschnittes (12) der Rollenschneidmaschine eine Messvorrichtung (18) angeordnet ist zum Sicherstellen der korrekten Breite der Bahn.

3. Rollenschneidmaschine gemäß Anspruch 1 oder 2, **dadurch gekennzeichnet, dass** die Messvorrichtung (18) mit einer Messdatenbehandlungsvorrichtung (16) gekuppelt ist, und dass von der Messdatenbehandlungsvorrichtung (16) eine Rückführung zu der Randstreifenschneidvorrichtung (10) erfolgt.

## Revendications

1. Refendeuse-bobineuse qui comprend une station de débobinage (11), une section de tronçonnage (12) et une section d'embobinage (13) de la refendeuse-bobineuse, un triturateur (14) est situé en dessous de la station de débobinage (11), sur le trajet de la bobine (W) entre la station de débobinage (11) et la section de tronçonnage (12) de cette refendeuse-bobineuse est situé un dispositif (10) de cisaillage des rives,
**caractérisée en ce que**
le dispositif (10) de cisaillage des rives est situé à proximité de la station de débobinage (11) de sorte qu'avant le tronçonnage effectif de la bobine en bobines partielles réalisé dans la section de tronçonnage, les rives refendues (T) qui sont refendues à partir des deux rives de la bobine pleine largeur par le dispositif de cisaillage des rives puissent être guidées dans le triturateur (14) de la station de débobinage (11).

2. Refendeuse-bobineuse selon la revendication 1, **caractérisée en ce qu'**après le dispositif (10) de cisaillage des rives, au voisinage de la section de tronçonnage (12) de la refendeuse-bobineuse, est situé un dispositif de mesure (18) destiné à garantir la largeur correcte de la bobine.

3. Refendeuse-bobineuse selon la revendication 1 ou 2, **caractérisée en ce que** le dispositif de mesure (18) est couplé à un dispositif (16) de traitement de données de mesure et qu'à partir du dispositif (16) de traitement de données de mesure, il y a une réalimentation au dispositif (10) de cisaillage des rives.
